# EUROPEAN PATENT APPLICATION

(11) **EP 4 752 588 A1**
(43) Date of publication of application: **03.06.2026**
(21) Application number: 25203356.8
(22) Date of filing: 19.09.2025
(51) Int. Cl.: G01S 7/00, G01S 7/41, G01S 13/42, G01S 13/86, G01S 13/931, B60L 58/10

(54) **ENVIRONMENT RECOGNITION SENSOR DEVICE AND ENVIRONMENT RECOGNITION METHOD THEREOF, AND BATTERY PACK**

(30) Priority: 02.12.2024 KR 20240176687
(71) Applicant: SAMSUNG SDI CO., LTD., Yongin-si, Gyeonggi-do 17084 (KR)
(72) Inventor: KIM, Minsu, 17084 Yongin-si (KR)
(74) Representative: Marks & Clerk LLP

(57) **Abstract**

A battery pack includes a plurality of battery modules; a plurality of slave battery management systems (BMSs) comprising at least one antenna and configured to monitor the plurality of battery modules, respectively; a master BMS comprising at least one antenna and configured to communicate wirelessly with the plurality of slave BMSs; and an environmental recognition sensor device configured to control the antennas of the plurality of slave BMSs and the antenna of the master BMS as a phased array antenna and to control phase and amplitude of a signal corresponding to each antenna based on recognition results of a surrounding environment.

## Description

### BACKGROUND

### 1. Field

Aspects of some embodiments of the present disclosure relate to an environment recognition sensor device, an environment recognition method thereof, and a battery pack.

### 2. Description of the Related Art

Electric vehicles generally use electric motors (electric motors) to drive. The electric vehicles may use battery packs, which are high-voltage power sources, to drive electric motors.

The battery pack may include a plurality of battery modules and a battery management system (BMS). The BMS may include a plurality of slave BMSs that each detect and control the plurality of battery modules, and a master BMS that manages the battery pack by communicating with the plurality of slave BMSs.

The plurality of slave BMSs and the master BMS may be connected by wires, so as the number of battery modules in the battery pack increases, wirings are added and the connections become more complex. This has led to the introduction of wireless BMS. Using the wireless BMS may reduce complex wirings inside the battery pack, improve maintainability, and allow more battery cells to be added to the available space within the battery pack, thereby providing a longer driving range.

Meanwhile, autonomous driving technology may be utilized in the automobile industry to improve the safety and convenience of vehicles. An autonomous driving system may recognize the surrounding environment through various sensors (lidar, radar, cameras, etc.) and control the vehicle based on the surrounding environment recognition. A sensor fusion technology may be utilized to integrate data from these various sensors to enable accurate and reliable environmental recognition. However, using many sensors to accurately and reliably recognize the environment may result in increasing costs of the vehicle.

The above information disclosed in this Background section is only for enhancement of understanding of the background and therefore the information discussed in this Background section does not necessarily constitute prior art.

### SUMMARY

Aspects of some embodiments of the present disclosure include an environmental recognition sensor device and an environment recognition method thereof and a battery pack capable of relatively improving the performance of a sensor system of a vehicle by utilizing a wireless BMS.

According to some embodiments of the present disclosure, an environmental recognition sensor device includes: a phased array antenna system comprising a plurality of antennas, configured to control phase and amplitude of a signal applied to each of the plurality of antennas in a transmission mode, and configured to control phase and amplitude of a signal received from each of the plurality of antennas in a reception mode, wherein the plurality of antennas comprises at least one antenna of each of a plurality of slave battery Management systems (BMSs) and at least one antenna of a master BMS communicating with the plurality of slave BMSs; a sensor data processor configured to recognize a surrounding environment and to determine at least one beam target direction based on recognition results of the surrounding environment; an antenna array manager configured to configure at least one antenna array corresponding to the at least one beam target direction from the plurality of antennas; and a beam forming controller configured to control a phase and an amplitude of each antenna constituting the at least one antenna array to form beams in the at least one beam target direction.

According to some embodiments, the environmental recognition sensor device may be positioned within a battery pack. The battery pack may include the plurality of slave BMSs and the master BMS.

According to some embodiments, the environmental recognition sensor device may further include an integrated controller configured to control operations of the transmission mode and the reception mode by separating communication operations between the plurality of slave BMSs and the master BMS in time.

According to some embodiments, the sensor data processor may be configured to analyze vehicle data received from an autonomous driving control device of the vehicle and recognize the surrounding environment using analysis results of the vehicle data. The vehicle data may include sensor data collected from a sensor system of the autonomous driving control device and driving status information including a driving mode of the vehicle.

According to some embodiments, the sensor data processor may be configured to analyze a signal received through at least one antenna of the phased array antenna system in the reception mode, and to recognize the surrounding environment by combining analysis results of the received signal with the analysis results of the vehicle data.

According to some embodiments, the sensor data processor may be configured to analyze a signal received through at least one antenna of the phased array antenna system in the reception mode, to recognize the surrounding environment, and to provide the recognition results of the surrounding environment to an autonomous driving control device of a vehicle.

According to some embodiments, the sensor data processor may be configured to estimate a direction of the surrounding environment based on a phase difference of signals received through different antennas.

According to some embodiments, the sensor data processor may be configured to estimate a relative speed of the surrounding environment based on a frequency shift of signals transmitted and received through the at least one antenna.

According to some embodiments, the antenna array manager may be configured to monitor status of the plurality of antennas, configure the at least one antenna array using available antennas, and deactivates the remaining antennas except for the antennas configuring the at least one antenna array among the plurality of antennas.

According to some embodiments, the beam forming controller may be configured to determine the phase and the amplitude using a machine learning model learned using data collected in various environments.

According to some embodiments, the beam forming controller may be configured to correct the phase and amplitude, which are output data of the machine learning model, based on the beam target direction and the configuration of the antenna array.

According to some embodiments of the present disclosure, a battery pack includes: a plurality of battery modules; a plurality of slave battery management systems (BMSs) comprising at least one antenna and configured to monitor the plurality of battery modules, respectively; a master BMS comprising at least one antenna and configured to communicate wirelessly with the plurality of slave BMSs; and an environmental recognition sensor device configured to configure the antennas of the plurality of slave BMSs and the antenna of the master BMS as a phased array antenna and control a phase and an amplitude of a signal corresponding to each antenna based on recognition results of a surrounding environment.

According to some embodiments, the environmental recognition sensor device may include a sensor data processor configured to recognize the surrounding environment and determine at least one beam target direction based on the recognition results of the surrounding environment; an antenna array manager configured to configure at least one antenna array corresponding to the at least one beam target direction from the phased array antenna; and a beam forming controller configured to control the phase and the amplitude of each antenna constituting the at least one antenna array to form beams in the beam target direction.

According to some embodiments, the sensor data processor may be configured to analyze vehicle data received from an autonomous driving control device of a vehicle and recognize the surrounding environment using analysis results of the vehicle data, and the vehicle data may include sensor data collected from a sensor system of the autonomous driving control device and driving status information including a driving mode of the vehicle.

According to some embodiments, the sensor data processor may be configured to analyze signals received through the phased array antenna in a reception mode, recognize the surrounding environment, and provide recognition results of the surrounding environment to an autonomous driving control device of a vehicle.

According to some embodiments, the antenna array manager may be configured to monitor status of the plurality of antennas and configure the at least one antenna array using available antennas.

According to some embodiments of the present disclosure, in a method for recognizing an environment in an environment recognition sensor device positioned within a battery pack may be provided, the method includes: recognizing a surrounding environment; and controlling a phased array antenna comprising at least one antenna of each of a plurality of slave battery management systems (BMSs) that each monitor a plurality of battery modules and at least one antenna of a master BMS that communicates with the plurality of slave BMSs to form beams in at least one beam target direction based on recognition results of the surrounding environment.

According to some embodiments, the controlling the phased array antenna may include determining at least one beam target direction based on the recognition results of the surrounding environment; configuring at least one antenna array corresponding to the at least one beam target direction from the phased array antenna; and controlling the phase and the amplitude of each antenna constituting the at least one antenna array to form beams in the at least one beam target direction.

According to some embodiments, the configuring at least one antenna array may include monitoring status of each antenna constituting the phased array antenna; configuring the at least one antenna array using available antennas; and deactivating remaining antennas except the antennas constituting the at least one antenna array among the available antennas.

According to some embodiments, the recognizing the surrounding environment may include receiving signals through the phased array antenna; recognizing the surrounding environment by analyzing the received signals.

According to some embodiments, the recognizing the surrounding environment may include recognizing the surrounding environment by analyzing vehicle data received from an autonomous driving control device of a vehicle, wherein the vehicle data may include sensor data collected from a sensor system of the autonomous driving control device and driving status information comprising a driving mode of the vehicle.

At least some of the above and other features of the invention are set out in the claims.

### BRIEF DESCRIPTION OF THE DRAWINGS

FIG. 1 is a drawing showing an example of an electric vehicle according to some embodiments.
FIG. 2 is a drawing showing an environmental recognition sensor device according to some embodiments.
FIG. 3 is a drawing showing an antenna module of a BMS according to some embodiments.
FIG. 4 is a drawing showing an example of the beam forming controller illustrated in FIG. 2.
FIG. 5 is a drawing showing an example of an autonomous driving control device according to some embodiments of the present disclosure.
FIG. 6 is a flowchart illustrating an operation method of an environmental recognition sensor device according to some embodiments.
FIG. 7 is a drawing showing an environment recognition sensor device according to some embodiments.

### DETAILED DESCRIPTION

Aspects of some embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will more fully convey aspects of some embodiments to those skilled in the art. The drawings and description are to be regarded as illustrative in nature and not restrictive. Like reference numerals designate like elements throughout the specification. In the flowchart described with reference to the drawings in this specification, the order of operations may be changed, several operations may be merged, some operations may be divided, and specific operations may not be performed.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" with another component, it includes not only the case where two components are "directly connected" but also the case where two components are "indirectly or non-contactedly connected" with another component interposed therebetween, or the case where two components are "electrically connected." On the other hand, if an element is referred to as "directly connected" to another element, it should be understood that no other element exists in the middle.

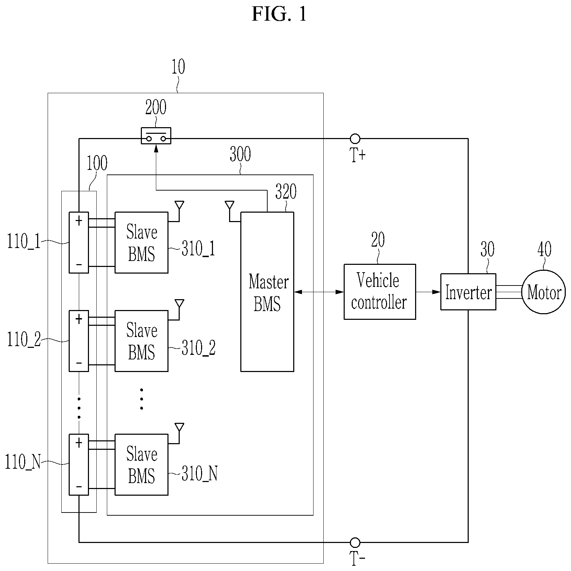

FIG. 1 is a drawing showing an example of an electric vehicle according to some embodiments of the present disclosure.

Referring to FIG. 1, an electric vehicle may include a battery pack 10, a vehicle controller 20, an inverter 30, and an electric motor 40.

The battery pack 10 may be connected to an external charging device or load through terminals T+ and T-, and the battery pack 10 may be charged by the external charging device and discharged by the load.

The vehicle controller 20 may be configured to transmit an ignition-on signal to a wireless battery management system (WBMS) 300 in response to an ignition button provided in the electric vehicle being switched to an ignition-on position by a user. The vehicle controller 20 may be configured to transmit an ignition-off signal to the WBMS 300 in response to the ignition button being switched to an ignition-off position by the user.

The inverter 30 may be connected between terminals T+ and T- of the battery pack 10 and may be configured to convert direct current (DC) from a battery 100 included in the battery pack 10 into alternating current (AC).

The electric motor 40 may be driven using AC power from the inverter 30. For example, a three-phase AC motor may be used as the electric motor 40. Components within an electric vehicle that receive discharge power from the battery 100, including the inverter 30 and the electric motor 40, may be collectively referred to as an electric load.

The battery pack 10 may include a battery 100, a relay 200, and a WBMS 300.

The battery 100 may provide high voltage and high capacity by including a plurality of battery modules 110_1 to 110_N electrically connected to each other in series and/or in parallel. For example, the voltage of the battery pack 10 used in an electric vehicle is usually close to 400 V, and the capacity may be 60 kWh or more.

The battery module 110_1 to 110_N may include a plurality of battery cells. The plurality of battery cells may be connected in series. Each of the plurality of battery cells may be, for example, a lithium-ion cell.

The relay 200 may control a current path during charging or discharging of the battery 100. The relay 200 may be connected between the battery 100 and the terminal T+. Alternatively, the relay 200 may be connected between the battery 100 and the terminal T-.

The relay 200 may be turned on or off in response to a switching signal from the WBMS 300. The relay 200 may be a mechanical contactor that is configured to be turned on or off by the magnetic force of a coil, or a semiconductor switch such as a metal oxide semiconductor field effect transistor (MOSFET).

If the relay 200 is turned on during operation of the electric load and/or the charging device, the battery 100 enters a charging mode or a discharging mode. If the relay 200 is turned off while the battery 100 is operating in charge mode or discharge mode, the battery 100 may be switched to idle mode.

The WBMS 300 may include a plurality of slave BMSs 310_1 to 310_N and a master BMS 320.

The plurality of slave BMSs 310_1 to 310_N may correspond one-to-one to the plurality of battery modules 110_1 to 110_N included in the battery pack 10. Each of the plurality of slave BMSs 310_1 to 310_N may be electrically connected to a corresponding battery module 110_1 to 110_N. For example, the slave BMS 310_1 may be electrically connected to the battery module 110_1, and the slave BMS 310_2 may be electrically connected to the battery module 110_2. The slave BMS 310_N may be electrically connected to the battery module 110_N.

The each of the plurality of slave BMSs 310_1 to 310_N may detect the overall status (e.g., voltage, current, temperature) of the battery modules 110_1 to 110_N electrically connected to itself, and perform various control functions (e.g., charging, discharging, balancing) to adjust the status of the battery modules 110_1 to 110_N. At this time, each control function may be performed directly by each slave BMS 310_1 to 310_N based on the status of the battery module 110_1 to 110_N or may be performed according to a command from the master BMS (320).

The master BMS 320 may receive information on battery modules 110_1 to 110_N from the plurality of slave BMSs 310_1 to 310_N and perform control functions such as state of charge (SOC), power control, cell balancing control, fault diagnosis control, cooling control, and thermal runaway detection control. In addition, the master BMS 320 may supply or cut off power of the battery modules 110_1 to 110_N to the load by controlling the relay 200 based on information of the battery modules 110_1 to 110_N.

The master BMS 320 may communicate with the plurality of slave BMSs 310_1 to 310_N using a wireless connection. The master BMS 320 and the plurality of slave BMSs 310_1 to 310_N may each include at least one antenna.

According to some embodiments, at least one antenna of each of the plurality of slave BMSs 310_1 to 310_N may be placed on top of a corresponding battery module 110_1 to 110_N. For example, each of the plurality of slave BMSs 310_1 to 310_N may include two antennas, and the two antennas may be placed on a top part of the battery modules 110_1 to 110_N at a distance (e.g., a set or predetermined distance) from each other.

The wireless connection between the master BMS 320 and the plurality of slave BMSs 310_1 to 310_N may be capable of relatively reducing the complexity of communication wirings, relatively reducing the volume of the battery pack 10, adding relatively more battery cells to the available space within the battery pack 10, and thereby providing a relatively longer driving distance.

According to some embodiments, the antennas of the WBMS 300, that is, the antennas of the plurality of slave BMSs 310_1 to 310_N and the master BMS 320, may be antennas capable of controlling the magnitude (amplitude) and phase of a signal. Accordingly, a phased array antenna may be configured with antennas of the plurality of slave BMSs 310_1 to 310_N and a master BMS 320, and the battery pack 10 may operate as a single sensor device using antennas of the plurality of slave BMSs 310_1 to 310_N and a master BMS 320.

For example, the battery pack 10 may operate as a sensor device for recognizing the environment during autonomous driving of the vehicle, and may transmit the sensing results to the autonomous driving control device of the vehicle.

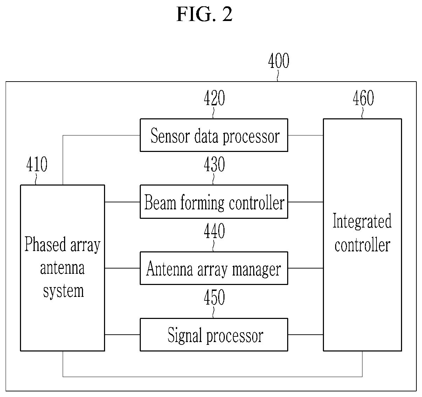

FIG. 2 is a drawing showing an environmental recognition sensor device according to some embodiments.

Referring to FIG. 2, an environmental recognition sensor device 400 may be located within a battery pack 10 and may function as a sensor for environmental recognition by using antennas of the plurality of slave BMSs 310_1 to 310_N and a master BMS 320.

The environmental recognition sensor device 400 may include a phased array antenna system 410, a sensor data processor 420, a beam forming controller 430, an antenna array manager 440, a signal processor 450, and an integrated controller 460.

The phased array antenna system 410 may include antennas of the plurality of slave BMSs 310_1 to 310_N and a master BMS 320.

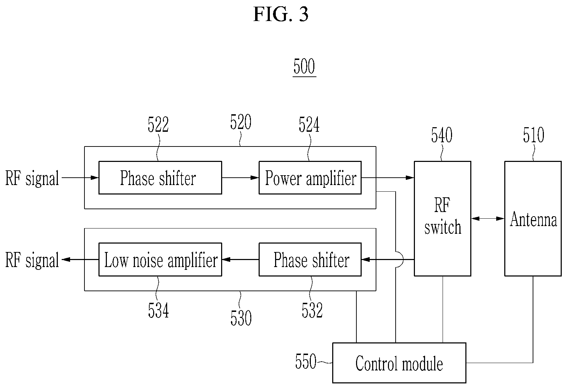

FIG. 3 is a drawing showing an antenna module of a BMS according to some embodiments.

Referring to FIG. 3, the BMS 500 may represent each of the plurality of slave BMSs 310_1 to 310_N and the master BMS 320.

The BMS 500 may include an antenna 510, a transmission module 520, a reception module 530, an RF switch 540, and a control module 550. The transmission module 520, the reception module 530, the RF switch 540, and the control module 550 may be provided corresponding to one antenna 510, and the number of transmission modules 520, reception modules 530, RF switches 540, and control modules 550 may be determined according to the number of antennas 510.

The antenna 510 may transmit RF signals in a transmitting mode and receive RF signals in a receiving mode. The antenna 510 may be a patch antenna and may have linear vertical polarization.

Referring to FIGS. 2 and 3 together, the transmission module 520 may be connected to the antenna 510. The transmission module 520 may change the phase and amplitude of the transmitted RF signal. The transmission module 520 may adjust the phase and amplitude of the transmission RF signal according to the control command of the control module 550. The transmission module 520 may include a phase shifter 522 and a power amplifier 524. The phase shifter 522 may change the phase of the transmission RF signal according to a phase control command of the control module 550. The power amplifier 524 may amplify the power of the transmission RF signal according to an amplitude control command of the control module 550, and transmit it to the antenna 510.

The reception module 530 may be connected to the antenna 510. The reception module 530 may change the phase and amplitude of a reception RF signal. The reception module 530 may adjust the phase and amplitude of the reception RF signal according to a control command of the control module 550. The reception module 530 may include a phase shifter 532 and a low noise amplifier 534. The phase shifter 532 may change the phase of the received RF signal according to the phase control command of the control module (550). The low noise amplifier 534 may amplify the reception RF signal with low noise according to an amplitude control command of the control module 550, and output it. The amplified reception RF signal by the low noise amplifier 534 may be transmitted to the signal processor 450.

The RF switch 540 may connect the transmission module 520 and the antenna 510 or the reception module 530 and the antenna 510 under the control of the control module 550. That is, the RF switch 540 may connect the transmission module 520 to the antenna 510 in a transmission mode under the control of the control module 550. The RF switch 540 may connect the reception module 530 and the antenna 510 to the antenna 510 in a reception mode under the control of the control module 550.

The control module 550 may control the antenna 510, the transmission module 520, the reception module 530, and the RF switch 540 according to the control command of the integrated controller 460.

The control module 550 may control the transmission module 520 and the reception module 530 according to the phase and amplitude control commands of the beam forming controller 430.

The control module 550 may measure phase offset and amplitude offset from a transmission RF signal transmitted through the antenna 510 upon initial power-on, and generate internal correction values including the phase offset and amplitude offset. If the control module 550 receives the phase value and amplitude value in the transmission mode through the phase and amplitude control commands of the beam forming controller 430, it may correct the phase value and amplitude value by reflecting the phase offset and amplitude offset, which are internal correction values, to the received phase value and amplitude value, respectively. The control module 550 may transmit a phase control signal including a corrected phase value and an amplitude control signal including a corrected amplitude value to the phase shifter 522 and the power amplifier 524, respectively.

The control module 550 may measure phase offset and amplitude offset from a reception RF signal received through the antenna 510 upon initial power-on, and generate internal correction values including the phase offset and amplitude offset. If the control module 550 receives phase values and amplitude values in the reception mode through the phase and amplitude control commands of the beam forming controller 430, it may correct the phase values and amplitude values by reflecting the phase offset and amplitude offset, which are internal correction values, to the received phase values and amplitude values, respectively. The control module 550 may transmit a phase control signal including a corrected phase value and an amplitude control signal including a corrected amplitude value to the phase shifter 532 and the low noise amplifier 534, respectively.

According to some embodiments, the control module 550 may measure signal quality information of the reception RF signal received via the antenna 510. The signal quality information may include, for example, signal strength and channel status information. The control module 550 may transmit signal quality information of the reception RF signal to the beam forming controller 430.

The phased array antenna system 410 may further include the transmission module 520, the reception module 530, the RF switch 540, and the control module 550 provided corresponding to each antenna 510 of the plurality of slave BMSs 310_1 to 310_N and the master BMS 320.

The antenna 510 and the transmission module 520, reception module 530, RF switch 540, and control module 550 provided corresponding to the antenna 510 are collectively referred to as an antenna module, the phased array antenna system 410 may reconfigure all of the antenna modules located in a plurality of slave BMSs 310_1 to 310_N and the master BMS 320 into a phased array antenna. For example, each of the plurality of slave BMSs 310_1 to 310_N and the master BMS 320 may include two antenna modules. Then, if the total number of antenna modules becomes 2x(N+1), the antenna may be reconfigured into an MxL array antenna using 2x (N+1) antenna modules. As an example, M=2, L=(N+1), where N may be a positive integer greater than 2.

In addition, a shield may be installed between the antenna module and the battery 100, and interference between the antenna module and the battery 100 may be minimized through the shield.

The plurality of antennas may be strategically placed along the structure of the battery 100 to enable 360-degree omnidirectional detection. For example, some of the plurality of antennas may be arranged to sense the front, others may be arranged to sense the right side, others may be arranged to sense the left side, and still others may be arranged to sense the rear.

The sensor data processor 420 may analyze reception RF signals received through the plurality of antennas. The sensor data processor 420 may analyze the reception RF signals, and estimate the position, speed, direction, etc. of surrounding objects. The sensor data processor 420 may use various signal processing techniques, such as doppler effect analysis and time delay estimation, to estimate objects.

Furthermore, the sensor data processor 420 may measure channel status information from reception RF signals received through the plurality of antennas and measure signal quality information of the reception RF signals. The signal quality information may include a signal to noise ratio (SNR), a signal to interference plus noise ratio (SINR), etc.

The sensor data processor 420 may transmit channel status information of the reception RF signals and signal quality information of the reception RF signals to the beam forming controller 430.

According to some embodiments, the sensor data processor 420 may estimate the direction of a surrounding object based on the phase difference of reception RF signals received through different antennas. The sensor data processor 420 may estimate the locations of surrounding vehicles or pedestrians more accurately by applying advanced signal processing techniques such as a multiple signal classification (MUSIC) algorithm.

According to some embodiments, the sensor data processor 420 may estimate the relative velocity of an object based on a frequency shift of signals transmitted and received through at least one antenna, may distinguish between a stationary object and a moving object by applying a pulse doppler processing technique, and may estimate a velocity vector of the object.

The sensor data processor 420 may analyze vehicle data. The vehicle data may include data collected from at least one sensor installed in a vehicle for autonomous driving of the electric vehicle, location information of the electric vehicle, and driving information of the vehicle. The at least one sensor installed in the vehicle for autonomous driving may include, for example, a camera sensor, a radar sensor, a lidar sensor, an ultrasonic sensor, a distance sensor, a global positioning system (GPS) sensor, etc.

The sensor data processor 420 may recognize the surrounding environment based on the analysis results of vehicle data and the analysis results of the reception RF signals. For example, the sensor data processor 420 may detect objects (e.g., pedestrians, objects, obstacles, surrounding vehicles, etc.) based on the analysis results of vehicle data and the analysis results of the reception RF signals. That is, the sensor data processor 420 may estimate object information more accurately by combining the analysis results of vehicle data and the analysis results of the reception RF signals.

The sensor data processor 420 may determine beam target directions requiring beam steering based on the results of recognizing the surrounding environment. The sensor data processor 420 may determine the beam target directions to steer the beam by considering the results of the surrounding environment recognition and driving situations. The driving situations may include a driving mode.

According to some embodiments, the sensor data processor 420 may receive surrounding environment recognition information from an autonomous driving control device that controls autonomous driving of the vehicle. The sensor data processor 420 may determine the beam target directions to steer the beam based on the surrounding environment recognition information and driving conditions. In addition, according to some embodiments, the sensor data processor 420 may determine the beam target directions by further considering the analysis data of the reception RF signals received through the plurality of antennas.

According to some embodiments, the sensor data processor 420 may provide the results of the surrounding environment recognition based on the analysis results of the reception RF signals to the autonomous driving control device.

The beam forming controller 430 may determine phases and amplitudes of the antenna modules corresponding to the antenna array configuration in the transmission mode based on the beam target directions and the optimal antenna array configuration determined by the sensor data processor 420, and may generate a phase control command and an amplitude control command including the phase value and amplitude value of each the antenna modules corresponding to the antenna array configuration, respectively. The phase control command and amplitude control command of each antenna module corresponding to the antenna array configuration in the transmission mode may be transmitted to the control module 550 within the corresponding antenna module.

The beam forming controller 430 may determine phases and amplitudes of the antenna modules corresponding to the antenna array configuration in the reception mode based on the beam target directions and the optimal antenna array configuration determined by the sensor data processor 420, and may generate a phase control command and an amplitude control command including the phase value and amplitude value of each the antenna modules corresponding to the antenna array configuration, respectively. The phase control command and amplitude control command of each antenna module corresponding to the antenna array configuration in the reception mode may be transmitted to the control module 550 within the corresponding antenna module.

The beam forming controller 430 may control beams in the beam target directions by adjusting the phase of the RF signal corresponding to each antenna based on the beam target directions and the optimal antenna array configuration. Furthermore, the beam forming controller 430 may control the shape and side lobe level of the beam by adjusting the power of the RF signal corresponding to each antenna based on the beam target directions and the optimal antenna array configuration.

The beam forming controller 430 may calculate the phase and amplitude for forming an optimal beam pattern based on the beam target directions, the optimal antenna array configuration, the phase and amplitude of the reception RF signals received through the antenna module, and the signal quality information of the reception RF signals.

In addition, the beam forming controller 430 may calculate a transmission beam forming weight based on channel state information of the reception RF signals received through the antenna module, and may calculate the phase and amplitude of the transmission RF signal according to the beam target directions, the optimal antenna array configuration, and the transmission beam forming weight.

The antenna array manager 440 may monitor the status of a plurality of antennas and dynamically configure the antenna array to steer beams based on available antennas and beam target directions. The antenna array manager 440 may deactivate antennas with low beam steering contribution to beam steering among the plurality of antennas, considering the position of the antennas according to the beam target directions.

For example, when the beam target direction is 60 degrees forward, the antenna array manager 440 may select only some antennas arranged to detect the forward direction using the antenna array to steer the beams, considering the positions of the available antennas. In this way, energy consumption may be reduced by selectively activating the antennas depending on the beam target direction.

As another example, when the beam target direction is omnidirectional 360 degrees, the antenna array manager 440 may divide all available antennas into a plurality of array antenna that steer the beams in different directions to enable beam steering in the 360-degree omnidirectional manner.

The signal processor 450 may convert the reception RF signals received through the phased array antenna system 410 into digital form and perform initial processing. The processed data may be transmitted to the sensor data processor 420.

The integrated controller 460 may control the phased array antenna system 410, sensor data processor 420, beam forming controller 430, antenna array manager 440, and signal processor 450.

In addition, the integrated controller 460 may communicate with the master BMS (320 in FIG. 1). The integrated controller 460 may control the transmission mode and reception mode of the RF signals through communication with the master BMS (320 in FIG. 1). For example, the integrated controller 460 may temporally separate the wireless communication operation between the plurality of slave BMSs 310_1 to 310_N and the master BMS 320 and transmission/reception mode operation of the RF signal.

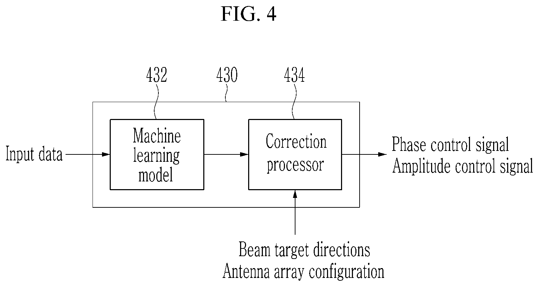

FIG. 4 is a drawing showing an example of the beam forming controller illustrated in FIG. 2.

Referring to FIG. 4, the beam forming controller 430 may include a machine learning model 432 and a correction processor 434.

The machine learning model 432 may receive input data, predict a phase value and an amplitude value, and output the predicted phase value and amplitude value. The input data of the machine learning model 432 may include location information of the antenna, GPS coordinate values which are vehicle location data, vehicle driving information, surrounding vehicle information, base station information, antenna channel status information, and battery module status information. Here, the location information of the antenna may be used as identification information of the antenna. A preprocessing process may be performed on the input data before it is input to the machine learning model 432.

The machine learning model 432 may be trained using data collected in various environments through actual driving tests and simulations.

The correction processor 434 may correct the phase value and amplitude value of each antenna output from the machine learning model 432 based on the beam target directions and the optimal antenna array configuration information. The correction processor 434 may transmit a phase control signal including the phase value of each antenna and may transmit an amplitude control signal including the amplitude value of each antenna.

According to some embodiments, beam target directions and optimal antenna array configuration information may also be used as input data for the machine learning model 432. The machine learning model 432 may be trained using the data collected in various environments through actual driving tests and simulations, as well as the beam target directions and optimal antenna array configuration information as learning data. In this case, the correction processor 434 may transmit a phase control signal including the phase value of each antenna output from the machine learning model 432, and may transmit an amplitude control signal including the amplitude value of each antenna output from the machine learning model 432.

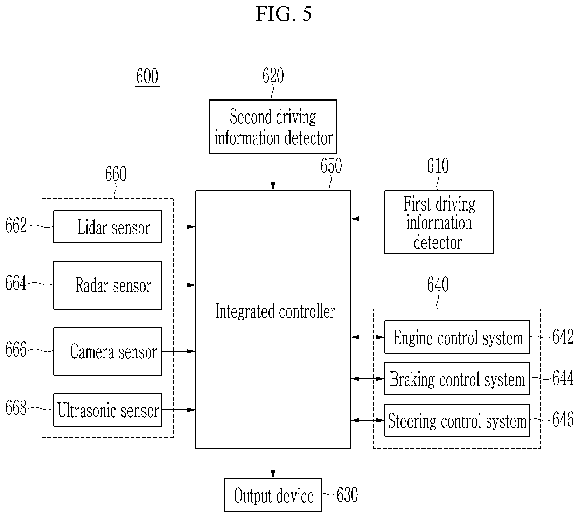

FIG. 5 is a drawing showing an example of an autonomous driving control device according to some embodiments of the present disclosure.

Referring to FIG. 5, the autonomous driving control device 600 may include a first driving information detector 610, a second driving information detector 620, an output part 630, a lower control system 640, an integrated controller 650, and a sensor system 660.

The first driving information detector 610 may detect a first driving information according to the operation of driver in autonomous driving mode or manual driving mode of the vehicle. The first driving information may include driving mode information and navigation information. The driving mode information (i.e., autonomous driving mode/manual driving mode) may be transmitted to the integrated controller 650 as the first driving information. In addition, navigation information such as the route to the destination input by the driver may be transmitted to the integrated controller 650 as the first driving information.

The second driving information detector 620 may detect a second driving information indicating the driving status of the vehicle and transmit the second driving information to the integrated controller 650. The second driving information may include a steering angle formed as the driver operates the steering wheel, an accelerator pedal stroke or a brake pedal stroke formed as the driver presses the accelerator pedal or the brake pedal, and various information indicating the driving status and behavior of the vehicle, such as a vehicle speed, acceleration, yaw, pitch, and roll, and the second driving information detector 620 may include various sensors for detecting such driving information. For example, the second driving information detector 620 may include a steering angle sensor, an accel position sensor (APS)/pedal travel sensor (PTS), a vehicle speed sensor, an acceleration sensor, and a yaw/pitch/roll sensor. In addition, the second driving information of the vehicle may include the location information of the vehicle, and the location information of the vehicle may be obtained through a global positioning system (GPS) receiver applied to the vehicle. These second driving information may be transmitted to the integrated controller 650 and used to control the driving of the vehicle in autonomous driving mode or manual driving mode.

The integrated controller 650 may obtain the first driving information according to the operation of the driver and the second driving information indicating the driving status of the vehicle, and may transmit driving status information and warning information generated according to an autonomous driving algorithm processed by an internal processor to an output device 630, and may also transmit control information generated according to the autonomous driving algorithm processed by the internal processor to a lower control system 640 to enable driving control of the vehicle. These driving status information and warning information may be output audibly and visually.

The driver may check the autonomous driving status or manual driving status of the vehicle based on the driving status information output through the output device 630, and the driving status information may include various information indicating the driving status of the vehicle, such as the current driving mode, transmission range, and vehicle speed.

The integrated controller 650 may transmit control information for driving control of the vehicle in the autonomous driving mode or manual driving mode of the vehicle to the lower control system 640 applied to the vehicle. The lower control system 640 for driving control of the vehicle may include an engine control system 642, a braking control system 644, and a steering control system 646, and the integrated controller 650 may transmit engine control information, braking control information, and steering control information as control information to the engine control system 642, the braking control system 644, and the steering control system 646, respectively. Accordingly, the engine control system 642 may control the speed and acceleration of the vehicle by increasing or decreasing the fuel supplied to the engine, the brake control system 644 may control the braking of the vehicle by adjusting the braking force of the vehicle, and the steering control system 646 may control the steering of the vehicle through a steering device (e.g., a motor driven power steering (MDPS) system) applied to the vehicle.

In order to ensure stable autonomous driving of the vehicle, it is necessary to continuously monitor the driving status by accurately measuring the driving environment of the vehicle and control driving according to the measured driving environment. To this end, the autonomous driving control device 600 may include a sensor system 660 for detecting the surrounding environment such as surrounding vehicles, pedestrians, roads, or fixed facilities (e.g., traffic lights, traffic signs, construction fences, etc.).

The sensor system 660 may include one or more of a lidar sensor 662, a radar sensor 664, and a camera sensor 666 to detect surrounding objects outside the vehicle.

The lidar sensor 662 may detect surrounding objects outside the vehicle by transmitting signals around the vehicle and receiving signals that are reflected by the objects, and may detect surrounding objects located within a predefined set range, set vertical field of view range, and set horizontal field of view range according to its specifications. The lidar sensor 662 may be installed on at least one of the front, top, or rear of the vehicle, and the installation location and number of installations are not limited to a specific embodiment.

The integrated controller 650 may determine the location (including the distance to the object), speed, and direction of movement of each object by measuring the time it takes for a laser signal transmitted through the lidar sensor 662 to be reflected by the object and received.

The radar sensor 664 may detect surrounding objects outside the vehicle by emitting electromagnetic waves around the vehicle and receiving electromagnetic waves that are reflected by the objects, and may detect surrounding objects located within a predefined set distance, set vertical angle of view range, and set horizontal angle of view range according to its specifications. The radar sensor 664 may be installed on at least one of the front, left side, right side, or rear of the vehicle, and the installation location and number of installations are not limited to a specific embodiment.

The integrated controller 650 may determine the location (including the distance to the object), speed, and direction of movement of each object by analyzing the powers of electromagnetic waves transmitted and received through the radar sensor 664.

The camera sensor 666 may detect surrounding objects outside the vehicle by capturing the surroundings of the vehicle, and may detect surrounding objects located within a predefined set distance, set vertical angle of view range, and set horizontal angle of view range according to its specifications. The camera sensor 666 may be installed on at least one of the front, left side, right side, or rear of the vehicle, and the installation location and number of installations are not limited to a specific embodiment.

The integrated controller 650 may determine the location (including the distance to the object), speed, and movement direction of each object by applying predefined image processing to the images captured through the camera sensor 666.

In addition, the sensor system 660 may further include an ultrasonic sensor 668, and various types of sensors for detecting objects around the vehicle may be further included in the sensor system 660.

The integrated controller 650 may detect surrounding vehicles and surrounding objects in the all-round area of the vehicle using the sensors of the sensor system 660.

Such the autonomous driving control device 600 may be installed in the vehicle illustrated in FIG. 1, and sensor data collected by the sensor system 660 or environmental recognition results recognized by the sensor system 660 may be transmitted to the environmental recognition sensor device 400 in the battery pack 10. In addition, the environmental recognition result by the environmental recognition sensor device 400 may also be provided to the integrated controller 650 of the autonomous driving control device 600.

That is, the environmental recognition sensor device 400 may also operate as one sensor constituting the sensor system 660, and the integrated controller 650 of the autonomous driving control device 600 may combine (fuse) the environmental recognition result of the sensor system 660 and the environmental recognition result of the environmental recognition sensor device 400, accordingly, environmental recognition accuracy may be relatively improved, and a relatively more reliable and safe autonomous driving can be provided.

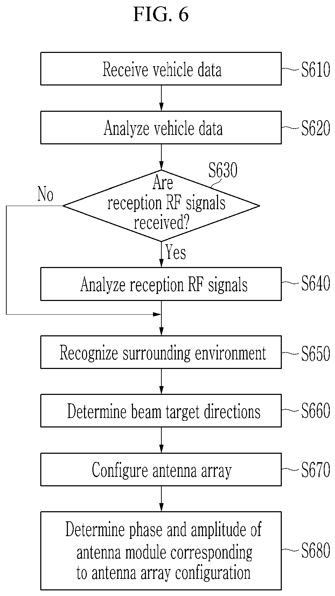

FIG. 6 is a flowchart illustrating aspects of a method of an environmental recognition sensor device according to some embodiments. Although FIG. 6 illustrates various operations in a method of an environmental recognition sensor device, embodiments according to the present disclosure are not limited thereto, and according to various embodiments, the method may include additional operations, or fewer operations, or the order of operations may vary, unless otherwise stated or implied, without departing from the scope of embodiments according to the present disclosure.

Referring to FIG. 6, the sensor data processor 420 of the environmental recognition sensor device 400 may receive vehicle data (S610). The vehicle data may include sensor data collected by the sensor system 660 of the autonomous driving control device 600 and/or environmental recognition results detected from sensor data collected by the sensor system 660, the first driving information detected by the first driving information detector 620, and the second driving information detected by the second driving information detector 610.

The sensor data processor 420 of the environmental recognition sensor device 400 may analyze vehicle data (S620).

The sensor data processor 420 of the environmental recognition sensor device 400 may recognize the surrounding environment based on the analysis results of vehicle data (S650). In contrast, the sensor data processor 420 of the environment recognition sensor device 400 may receive the environment recognition results detected from the autonomous driving control device 600.

If the reception RF signals are received through the phased array antenna system 410 (S630), the sensor data processor 420 of the environmental recognition sensor device 400 may analyze the reception RF signals (S640), and may recognize the surrounding environment using the analysis results of the vehicle data and the analysis results of the reception RF signals.

The sensor data processor 420 of the environment recognition sensor device 400 may determine the beam target directions requiring beam steering based on the environmental recognition results (S660). The sensor data processor 420 may determine the beam target directions to steer the beams by considering the environmental recognition results and the driving situation (S660).

The antenna array manager 440 may monitor the status of the plurality of antennas and dynamically configure an antenna array to steer beams based on available antennas and beam target directions (S670).

The beam forming controller 430 of the environmental recognition sensor device 400 may determine the phase and amplitude of the antenna module corresponding to the antenna array configuration for each of the transmission mode and reception mode based on the beam target directions and the optimal antenna array configuration determined by the sensor data processor 420 (S680).

The phased array antenna system 410 of the environmental recognition sensor device 400 may adjust the phase and amplitude of a signal applied to each corresponding antenna according to the phase and amplitude determined by the beam forming controller 430.

In this way, by adjusting the phase and amplitude of the antenna module corresponding to the antenna array configuration, beams may be formed in a desired direction using the antenna module corresponding to the antenna array configuration.

For example, if driving in a complex urban environment, the environment recognition sensor device 400 may determine beam target directions to steer the beams, such as 30 degrees in front of the vehicle, 120 degrees on both sides of the vehicle, 15 degrees toward the pedestrian if a pedestrian is detected, and 15 degrees toward the traffic light based on the location information of the traffic light captured by the camera by considering the results of the surrounding environment recognition and the driving situation. The antenna array manager 440 may configure an antenna array for each beam target direction, and the beam forming controller 430 may determine the phase and amplitude of the antenna module based on each beam target direction and antenna array configuration, thereby controlling the phase and amplitude of the corresponding antenna module and providing beams in each beam target direction.

In this way, the environmental recognition sensor device 400 enables forward detection by forming beams of 30 degrees forward using the antenna module arranged to look forward, and enables side detection by forming fan-shaped beams of 120 degrees using antenna modules arranged to detect left and right directions. In addition, the environmental recognition sensor device 400 may detect the moving speed and direction of a pedestrian by forming a narrow beam toward the location of a pedestrian for the pedestrian detected, and may detect a change in the status of a traffic light by forming beams in the direction of the traffic light.

In addition, the environmental recognition sensor device 400 may recognize a low-speed parking situation and form beams for 360 degrees around the vehicle using the entire antenna module, thereby supporting safe parking.

The environmental recognition results of the environmental recognition sensor device 400 may be provided to the autonomous driving control device 600.

As another example, in the case of a highway driving environment, the environmental recognition sensor device 400 may form a narrow and long beam in front of the vehicle by considering the results of the surrounding environmental recognition and the driving situation, thereby securing a sufficient braking distance by performing long-distance forward detection. It may form beams in the side blind spots and rear blind spot using antenna modules arranged to look at the side and rear, the blind spots, and intensively detects blind spots, thereby supporting lane changing of the autonomous driving control device 600. In addition, the environmental recognition sensor device 400 may measure a distance between the front and rear vehicles by forming beams forward and backward using antenna modules arranged to look at the front and rear, and may detect changes in the speed of the front vehicle through doppler processing. In addition, the environmental recognition sensor device 400 may analyze the road surface condition by adjusting the angle and waveform of the beams in case of rain, thereby detecting hydroplaning or freezing conditions in advance and supporting safe driving. The environmental awareness sensor device 400 may improve vehicle to everything (V2X) communication quality with surrounding vehicles or road infrastructure by utilizing beams forming of the phased array antenna system 410. For example, when communicating with a specific vehicle or road side unit (RSU), the beams may be steered in the direction of the specific vehicle or RSU to improve communication quality.

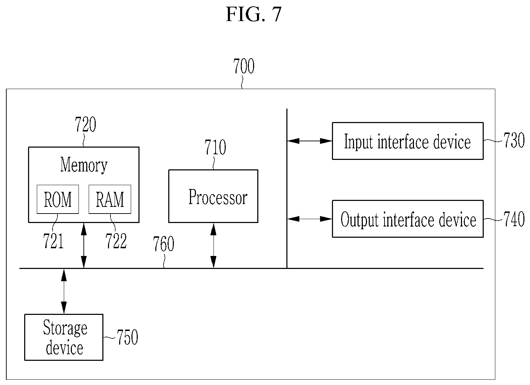

FIG. 7 is a drawing showing an environment recognition sensor device according to some embodiments.

Referring to FIG. 7, the environment recognition sensor device 700 may represent a computing device in which the environment recognition method of the environment recognition sensor device 400 described above is implemented.

The environmental recognition sensor device 700 may include at least one of a processor 710, a memory 720, an input interface device 730, an output interface device 740, or a storage device 750. Each component is connected to a bus 760 and may communicate with each other. In addition, each component may be connected through an individual interface or individual bus centered on the processor 710, rather than the common bus 760.

The processor 710 may be implemented as various types such as an application processor (AP), a central processing unit (CPU), a graphics processing unit (GPU), etc., and may be any semiconductor device that executes a command stored in the memory 720 or storage device 750. The processor 710 may execute program commands stored in at least one of the memory 720 or the storage device 750. The processor 710 stores program commands for implementing at least some functions of the phased array antenna system 410, sensor data processor 420, beam forming controller 430, antenna array manager 440, signal processor 450, and integrated controller 460 illustrated in FIG. 2 in the memory 720, and may perform the operations of the environmental recognition sensor device 400 described with reference to FIGS. 1 to 6 by executing the stored program commands.

The memory 720 and storage device 750 may include various forms of volatile or non-volatile storage media. For example, the memory 720 may include a read-only memory (ROM) 721 and a random access memory (RAM) 722. According to some embodiments, the memory 720 may be located inside or outside the processor 710, and the memory 720 may be connected to the processor 710 via various means already known.

The input interface device 730 may be configured to provide data to the processor 710. According to some embodiments, the input interface device 730 may provide data received from the autonomous driving control device 600 to the processor 710.

The output interface device 740 may be configured to output data from the processor 710. According to some embodiments, the output interface device 740 may output the environmental recognition result of the environmental recognition sensor device 700 to the autonomous driving control device 600.

According to some embodiments, the input interface device 730 and the output interface device 740 may be network interface devices connected to a network.

At least some of the environmental recognition methods according to the embodiments may be implemented as a program or software running on a computing device, and the program or software may be stored on a computer-readable medium.

In addition, at least some of the environmental recognition methods may be implemented in hardware that may be electrically connected to a computing device.

According to some embodiments, by configuring antennas of the slaves BMSs and master BMS as a phased array antenna, the phase and amplitude of each antenna may be adjusted to form beams in a desired direction, thereby maximizing the sensing sensitivity and recognizing the surrounding environment more accurately.

In addition, according to some embodiments, the battery pack may be used as a sensor device, and in particular, may be utilized as a sensor system of an autonomous driving control device, thereby providing more accurate and reliable autonomous driving.

Aspects of some embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims, and their equivalents.

## Claims

1. An environmental recognition sensor device comprising:
a phased array antenna system comprising a plurality of antennas, configured to control phase and amplitude of a signal applied to each of the plurality of antennas in a transmission mode, and configured to control phase and amplitude of a signal received from each of the plurality of antennas in a reception mode, wherein the plurality of antennas comprises at least one antenna of each of a plurality of slave battery management systems (BMSs) and at least one antenna of a master BMS communicating with the plurality of slave BMSs;
a sensor data processor configured to recognize a surrounding environment and to determine at least one beam target direction based on recognition results of the surrounding environment;
an antenna array manager configured to control at least one antenna array corresponding to the at least one beam target direction from the plurality of antennas; and
a beam forming controller configured to control a phase and an amplitude of each antenna constituting the at least one antenna array to form beams in the at least one beam target direction.

2. The environmental recognition sensor device as claimed in claim 1, wherein the environmental recognition sensor device is positioned within a battery pack, and
the battery pack comprises the plurality of slave BMSs and the master BMS.

3. The environmental recognition sensor device as claimed in claim 2, further comprising
an integrated controller configured to control operations of the transmission mode and the reception mode by separating communication operations between the plurality of slave BMSs and the master BMS in time.

4. The environmental recognition sensor device as claimed in any preceding claim, wherein the sensor data processor is configured to analyze vehicle data received from an autonomous driving control device of a vehicle and to recognize the surrounding environment using analysis results of the vehicle data, and
the vehicle data comprises sensor data collected from a sensor system of the autonomous driving control device and driving status information including a driving mode of the vehicle.

5. The environmental recognition sensor device as claimed in claim 4, wherein the sensor data processor is configured to analyze a signal received through at least one antenna of the phased array antenna system in the reception mode, and to recognize the surrounding environment by combining analysis results of the received signal with the analysis results of the vehicle data.

6. The environmental recognition sensor device as claimed in any preceding claim, wherein the sensor data processor is configured to analyze a signal received through at least one antenna of the phased array antenna system in the reception mode, to recognize the surrounding environment, and to provide the recognition results of the surrounding environment to an autonomous driving control device of a vehicle.

7. The environmental recognition sensor device as claimed in claim 6, wherein the sensor data processor is configured to estimate a direction of the surrounding environment based on a phase difference of signals received through different antennas.

8. The environmental recognition sensor device as claimed in claim 6 or claim 7, wherein the sensor data processor is configured to estimate a relative speed of the surrounding environment based on a frequency shift of signals transmitted and received through the at least one antenna.

9. The environmental recognition sensor device as claimed in any preceding claim, wherein the antenna array manager is configured to monitor status of the plurality of antennas, configure the at least one antenna array using available antennas, and deactivates the remaining antennas except for the antennas configuring the at least one antenna array among the plurality of antennas.

10. The environmental recognition sensor device as claimed in any preceding claim, wherein the beam forming controller is configured to determine the phase and the amplitude using a machine learning model learned using data collected in various environments.

11. The environmental recognition sensor device as claimed in claim 10, wherein the beam forming controller is configured to correct the phase and amplitude, which are output data of the machine learning model, based on the beam target direction and the configuration of the antenna array.

12. A method for recognizing an environment in an environment recognition sensor device positioned within a battery pack, the method comprising:
recognizing a surrounding environment; and
controlling a phased array antenna comprising at least one antenna of each of a plurality of slave battery management systems (BMSs) that each monitor a plurality of battery modules and at least one antenna of a master BMS that communicates with the plurality of slave BMSs to form beams in at least one beam target direction based on recognition results of the surrounding environment.

13. The method as claimed in claim 12, wherein the controlling the phased array antenna comprises
determining at least one beam target direction based on the recognition results of the surrounding environment;
configuring at least one antenna array corresponding to the at least one beam target direction from the phased array antenna; and
controlling a phase and an amplitude of each antenna constituting the at least one antenna array to form beams in the at least one beam target direction.

14. The method as claimed in claim 13, wherein the configuring at least one antenna array comprises
monitoring status of each antenna constituting the phased array antenna;
configuring the at least one antenna array using available antennas; and
deactivating remaining antennas except the antennas constituting the at least one antenna array among the available antennas.

15. The method as claimed in any of claims 12-14, wherein the recognizing the surrounding environment comprises
receiving signals through the phased array antenna;
recognizing the surrounding environment by analyzing the received signals; and
recognizing the surrounding environment by analyzing vehicle data received from an autonomous driving control device of a vehicle,
wherein the vehicle data comprises sensor data collected from a sensor system of the autonomous driving control device and driving status information comprising a driving mode of the vehicle.
